(19) Europäisches Patentamt
European Patent Office
Office européen des brevets

(11) **EP 4 507 399 A1**

(12) **EUROPEAN PATENT APPLICATION**
published in accordance with Art. 153(4) EPC

(43) Date of publication:
**12.02.2025  Bulletin 2025/07**

(21) Application number: **22936558.0**

(22) Date of filing: **08.04.2022**

(51) International Patent Classification (IPC):
*H04W 52/34* (2009.01)    *H04W 16/28* (2009.01)

(52) Cooperative Patent Classification (CPC):
**H04W 16/28; H04W 52/34**

(86) International application number:
**PCT/JP2022/017367**

(87) International publication number:
**WO 2023/195161 (12.10.2023 Gazette 2023/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**
• **SUN, Weiqi**
  **Beijing 100190 (CN)**
• **WANG, Jing**
  **Beijing 100190 (CN)**
• **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(54)    **TERMINAL, WIRELESS COMMUNICATION METHOD, AND BASE STATION**

(57)    A terminal according to one aspect of the present disclosure includes a receiving section that, when uplink (UL) simultaneous transmission from multiple panels is supported, receives a configuration related to transmission power per panel, and a control section that controls, based on the configuration, UL transmission power for each panel. According to one aspect of the present disclosure, it is possible to appropriately perform transmission power control for each panel.

FIG. 3A

FIG. 3B

FIG. 3C

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems, a UE can use one of multiple panels (or multiple beams) for uplink (UL) transmission. For improvement of UL throughput/reliability, it is studied that simultaneous UL transmission (for example, simultaneous multi-panel UL transmission (SiMPUL)) using a plurality of panels is supported for one or more transmission/reception points (TRPs).

However, in a case where the multi-panel simultaneous UL transmission is supported, transmission power control for each panel remains unclear. Therefore, appropriate transmission control for each panel may fail, and communication throughput may be reduced.

Thus, an object of the present disclosure is to provide a terminal, a radio communication method, and a base station that can appropriately perform transmission power control for each panel.

Solution to Problem

A terminal according to one aspect of the present disclosure includes a receiving section that, when uplink (UL) simultaneous transmission from multiple panels is supported, receives a configuration related to transmission power per panel, and a control section that controls, based on the configuration, UL transmission power for each panel.

Advantageous Effects of Invention

According to one aspect of the present disclosure, it is possible to appropriately perform transmission power control for each panel.

Brief Description of Drawings

[FIG. 1] FIGS. 1A to 1C are diagrams to show examples of PUSCH transmission using a plurality of panels.
[FIG. 2] FIGS. 2A and 2B are diagrams to show examples of PUCCH transmission using a plurality of panels.
[FIG. 3] FIG. 3A is a diagram to show an example of PUSCH simultaneous transmission using two panels. FIG. 3B is a diagram to show an example of PUCCH simultaneous transmission using two panels. FIG. 3C is a diagram to show an example of SRS simultaneous transmission using two panels.

[FIG. 4] FIG. 4 is a diagram to show a relationship between a UE power class and a UE type.

[FIG. 5] FIG. 5 is a diagram to show an example of a PHR MAC CE including maximum output power $P_{CMAXpanel,f,c,p}$ per panel.

[FIG. 6] FIG. 6A is a diagram to show an example in which transmission power is equally distributed among respective transmission panels. FIG. 6B is a diagram to show an example in which transmission power is unequally distributed among respective transmission panels.

[FIG. 7] FIG. 7 is a diagram to show an example of a schematic structure of a radio communication system according to one embodiment.

[FIG. 8] FIG. 8 is a diagram to show an example of a structure of a base station according to one embodiment.

[FIG. 9] FIG. 9 is a diagram to show an example of a structure of a user terminal according to one embodiment.

[FIG. 10] FIG. 10 is a diagram to show an example of a hardware structure of the base station and the user terminal according to one embodiment.

[FIG. 11] FIG. 11 is a diagram to show an example of a vehicle according to one embodiment.

Description of Embodiments

(Multi-panel Transmission)

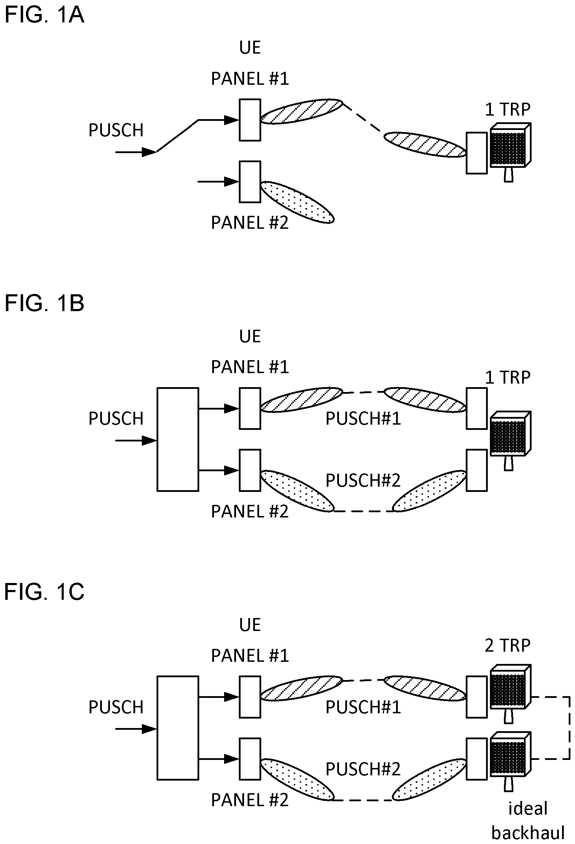

In a UE of each of Rel. 15 and Rel. 16, only one beam and panel are used for UL transmission at one timing (FIG. 1A). For Rel. 17, it is studied that simultaneous UL transmission with multiple beams (plurality of beams) and multiple panels (plurality of panels) is performed for one or more transmission/reception points (TRPs) to improve UL throughput and reliability.

For the simultaneous UL transmission using multiple beams and multiple panels, reception by one TRP including multiple panels (FIG. 1B) or reception by two TRPs including an ideal backhaul (FIG. 1C) is under study. A single PDCCH for scheduling of a plurality of PUSCHs (for example, simultaneous transmission of PUSCH #1 and PUSCH #2) is under study. Support of panel-specific transmission and introduction of a panel ID are under study.

A base station may configure or indicate panel-specific transmission for UL transmission by using UL transmission configuration indication (TCI) or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relationship information).

In simultaneous UL transmissions using multi-panel, the UE may perform transmission of a plurality of physical uplink control channels (PUCCHs). As transmission schemes for simultaneous UL transmission using multi-panel for PUCCHs, Schemes 1 and 2 below are under study.

{Scheme 1}

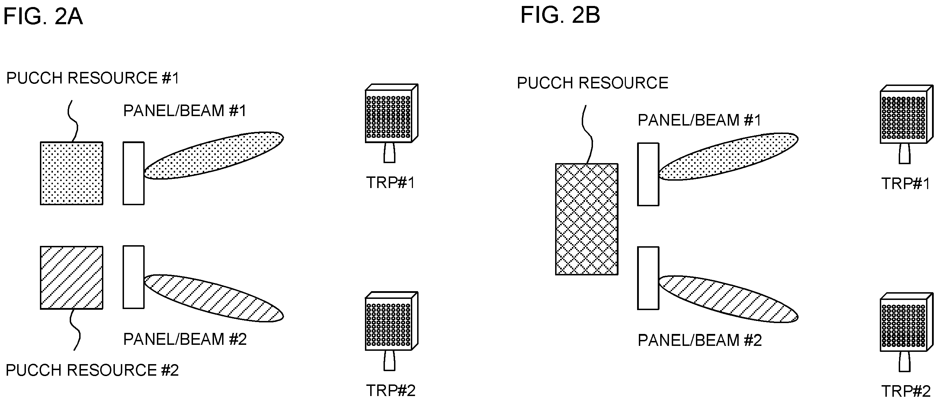

Two PUCCH resources overlap each other in a time domain, and are simultaneously transmitted. Each of the two PUCCH resources is associated with one different panel/beam (see FIG. 2A). Each of the two beams is transmitted to each TRP.

{Scheme 2}

One PUCCH resource is simultaneously transmitted by using two panels / spatial relations. The one PUCCH resource is associated with two panels/beams (see FIG. 2B). Each of the two beams is transmitted to each TRP.

Note that the case where the number of multiple panels is two is described as an example of the present disclosure, but in the present disclosure, the number of panels may be 3 or greater. In other words, the number of panels "2" may be interpreted as a number greater than or equal to 3.

Note that Scheme 2 may be applied to repetition transmission (repetition) of an SFN (single frequency network) PUCCH.

(UL TCI State)

For Rel-16 NR, it is studied that a UL TCI state is used as a UL beam indication method. Notification of the UL TCI state is similar to notification of a DL beam (DL TCI state) for the UE. Note that the DL TCI state may be interpreted as a TCI state for a PDCCH/PDSCH, and vice versa.

A channel/signal for which the UL TCI state is configured (specified) (which may be referred to as a target channel/RS) may be, for example, at least one of a PUSCH (DMRS for PUSCH), a PUCCH (DMRS for PUCCH), a random access channel (Physical Random Access Channel (PRACH)), an SRS, and the like.

An RS (source RS) to have a QCL relationship with the channel/signal may be, for example, a DL RS (for example, an SSB, a CSI-RS, a TRS, or the like) or a UL RS (for example, an SRS, an SRS for beam management, or the like).

In the UL TCI state, the RS to have the QCL relationship with the channel/signal may be associated with a panel ID for receiving or transmitting the RS. The association may be explicitly configured (or specified) by higher layer signaling (for example, RRC signaling, a MAC CE, or the like), or may be implicitly judged.

Correspondence between the RS and the panel ID may be included and configured in UL TCI state information, or may be included and configured in at least one of resource configuration information, spatial relation information, and the like for the RS.

A QCL type indicated by the UL TCI state may be existing QCL types A to D or another QCL type, and may include a certain spatial relation, an associated antenna port (port index), and the like.

When an associated panel ID is specified (for example, specified by DCI) for UL transmission, the UE may perform the UL transmission by using a panel corresponding to the panel ID. The panel ID may be associated with a UL TCI state, and when a UL TCI state is specified (or activated) for a certain UL channel/signal, the UE may identify a panel used for transmission of the UL channel/signal, in accordance with a panel ID associated with the UL TCI state.

(Transmission Power Control)

<PUSCH Transmission Power Control>

In NR (for example, Rel. 16), transmission power for a PUSCH is controlled based on a TPC command (also referred to as a value, an increasing/decreasing value, a correction value, or the like) indicated by a value of a certain field (also referred to as a TPC command field or the like) in DCI.

For example, when the UE transmits the PUSCH on active UL BWP b on carrier f of serving cell c by using a parameter set having index j (open-loop parameter set) and index 1 of a power control adjustment state, transmission power for the PUSCH ($P_{\text{PUSCH},b,f,c}(i, j, q_d, l)$) in PUSCH transmission occasion i (also referred to as a transmission period or the like) may be expressed by Equation 1 below.

[Math. 1]

(Equation 1)

$$P_{\text{PUSCH}b,f,c}(i, j, q_d, l) := \min \left\{ \begin{array}{l} P_{\text{CMAX},f,c}(i), \\ P_{\text{O\_PUSCH}b,f,c}(j) + 10\log_{10}(2^\mu \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{array} \right\}$$

Here, for the power control adjustment state, whether the power control adjustment state has a plurality of states (for example, 2 states) or a single state may be configured by a higher layer parameter. When a plurality of power control adjustment states are configured, one of the plurality of power control adjustment states may be identified by index 1 (for example, $1 \in \{0, 1\}$). The power control adjustment state may be referred to as a PUSCH power control adjustment state, a first or second state, or the like.

PUSCH transmission occasion i is a certain period in which the PUSCH is transmitted, and may be constituted by, for example, one or more symbols, one or more slots, or the like.

In Equation 1, $P_{\text{CMAX},f,c}(i)$ is, for example, transmission power (also referred to as maximum transmit power, UE maximum output power, or the like) of a user terminal configured for carrier f of serving cell c in transmission occasion i. $P_{\text{O\_PUSCH},b,f,c}(j)$ is, for example, a parameter related to target received power configured for active UL BWP b on carrier f of serving cell c in parameter set configuration j (also referred to as, for example, a parameter related to transmission power offset, transmission power offset P0, a target received power parameter, or the like).

$M_{\text{RB},b,f,c}^{\text{PUSCH}}(i)$ is, for example, the number of resource blocks (bandwidths) allocated to the PUSCH for transmission occasion i in active UL BWP b on carrier f in serving cell c and with subcarrier spacing $\mu$. $\alpha_{b,f,c}(j)$ is a value provided by a higher layer parameter (also referred to as, for example, msg3-Alpha, p0-PUSCH-Alpha, a fractional factor, or the like).

$PL_{b,f,c}(q_d)$ is, for example, a pathloss (pathloss compensation) calculated in the user terminal by using index $q_d$ of a reference signal (pathloss reference RS, pathloss measurement DL RS, PUSCH-PathlossReferenceRS) for a downlink BWP associated with active UL BWP b on carrier f of serving cell c.

$\Delta_{\text{TF},b,f,c}(i)$ is a transmission power adjustment component (offset, transmission format compensation) for UL BWP b on carrier f of serving cell c.

$f_{b,f,c}$ (i, 1) is a value based on a TPC command with power control adjustment state index 1 above for the active UL BWP on carrier f in serving cell c and transmission occasion i (for example, a power control adjustment state, an accumulated value of the TPC command, or a closed-loop value). 1 may be referred to as a closed-loop index.

When the UE is not provided with the pathloss reference RS (for example, PUSCH-PathlossReferenceRS) or when the UE is not provided with a dedicated higher layer parameter, the UE may calculate $PL_{b,r,c}$ ($q_d$) by using an RS resource from an SSB used to obtain a Master Information Block (MIB).

When the UE is configured with a number of RS resource indices up to a value of a maximum number of pathloss reference RSs (for example, maxNrofPUSCH-PathlossReferenceRS), and is configured by the pathloss reference RS with a set of respective RS configurations for the RS resource indices, the set for the RS resource indices may include one or both of a set of SS/PBCH block indices and a set of CSI-RS resource indices. The UE may identify RS resource index $q_d$ in the set for the RS resource indices.

When PUSCH transmission is scheduled by a Random Access Response (RAR) UL grant, the UE may use same RS resource index $q_d$ as that for corresponding PRACH transmission.

When the UE is provided with a PUSCH power control configuration based on a sounding reference signal (SRS) resource indicator (SRI) (for example, SRI-PUSCH-PowerControl), and is provided with one or more values of an ID of the pathloss reference RS, mapping between a set of values for an SRI field in DCI format 0_1 and a set of ID values for the pathloss reference RS may be obtained from higher layer signaling (for example, sri-PUSCH-PowerControl-Id in SRI-PUSCH-PowerControl). The UE may determine RS resource index $q_d$, based on an ID of the pathloss reference RS mapped to an SRI field value in DCI format 0_1 for scheduling the PUSCH.

When PUSCH transmission is scheduled by DCI format 0_0, and the UE is not provided with PUCCH spatial relation information for a PUCCH resource having the lowest index for active UL BWP b on each carrier f and in serving cell c, the UE may use same RS resource index $q_d$ as that for PUCCH transmission in the PUCCH resource.

When PUSCH transmission is scheduled by DCI format 0_0, and the UE is not provided with a spatial setting for PUCCH transmission, when PUSCH transmission is scheduled by DCI format 0_1 not including the SRI field, or when the SRI-based PUSCH power control configuration is not provided for the UE, the UE may use RS resource index $q_d$ having a pathloss reference RS ID of zero.

When a configured grant configuration (for example, ConfiguredGrantConfig) includes a certain parameter (for example, rrc-ConfiguredUplinkGrant) for PUSCH transmission configured by the configured grant configuration, RS resource index $q_d$ may be provided for the UE by a pathloss reference index (for example, pathlossReferenceIndex) in the certain parameter.

When the configured grant configuration does not include the certain parameter for the PUSCH transmission configured by the configured grant configuration, the UE may determine RS resource index $q_d$, based on a pathloss reference RS ID value mapped to an SRI field in a DCI format for activating the PUSCH transmission. When the DCI format does not include the SRI field, the UE may determine RS resource index $q_d$ having a pathloss reference RS ID of zero.

<PUCCH Transmission Power Control>

In NR, transmission power for a PUCCH is controlled based on a TPC command (also referred to as a value, an increasing/decreasing value, a correction value, an indicated value, or the like) indicated by a value of a certain field (also referred to as a TPC command field, a first field, or the like) in DCI.

For example, by using index 1 of a power control adjustment state, transmission power for the PUCCH ($P_{PUCCH,b,f,c}$ (i, $q_u$, $q_d$, 1)) in PUCCH transmission occasion i (also referred to as a transmission period or the like) for active UL BWP b on carrier f of serving cell c may be expressed by Equation 2 below.

[Math. 2]

(Equation 2)

$$P_{PUCCHb,f,c}(i,q_u,q_d,l) =$$

$$= \min \left\{ \begin{array}{l} P_{CMAX,f,c}(i), \\ P_{0\_PUCCHb,f,c}(q_u) + 10\log_{10}(2^{\mu} \cdot M_{RB,b,f,c}^{PUCCH}(i)) + PL_{b,f,c}(q_d) + \Delta_{F\_PUCCH}(F) + \Delta_{TF,b,f,c}(i) + g_{b,f,c}(i,l) \end{array} \right\}$$

The power control adjustment state may be referred to as a PUCCH power control adjustment state, a first or second state, or the like.

PUCCH transmission occasion i is a certain period in which the PUCCH is transmitted, and may be constituted by, for example, one or more symbols, one or more slots, or the like.

In Equation 2, $P_{CMAX,f,c}$ (i) is, for example, transmission power (also referred to as maximum transmit power, UE maximum output power, or the like) of a user terminal configured for carrier f of serving cell c in transmission occasion i. $P_{O\_PUCCH,b,f,c}$ ($q_u$) is, for example, a parameter related to target received power configured for active UL BWP b on carrier f of serving cell c in transmission occasion i (also referred to as, for example, a parameter related to transmission power offset, transmission power offset P0, a target received power parameter, or the like).

$M^{PUCCH}_{RB,b,f,c}$ (i) is, for example, the number of resource blocks (bandwidths) allocated to the PUCCH for transmission occasion i in active UL BWP b on carrier f in serving cell c and with subcarrier spacing μ. $PL_{b,f,c}$ ($q_d$) is, for example, a pathloss calculated in the user terminal by using index $q_d$ of a reference signal (pathloss reference RS, pathloss measurement DL RS, PUCCH-PathlossReferenceRS) for a downlink BWP associated with active UL BWP b on carrier f of serving cell c.

$\Delta_{F\_PUCCH}$ (F) is a higher layer parameter given for each PUCCH format. $\Delta_{TF,b,f,c}$ (i) is a transmission power adjustment component (offset) for UL BWP b on carrier f of serving cell c.

$g_{b,f,c}$ (i, 1) is a value based on a TPC command with power control adjustment state index 1 above for the active UL BWP on carrier f in serving cell c and transmission occasion i (for example, a power control adjustment state, an accumulated value of the TPC command, a closed-loop value, or a PUCCH power adjustment state).

If the UE is provided with information (twoPUCCH-PC-AdjustmentStates) indicating use of two PUCCH power control adjustment states and PUCCH spatial relation information (PUCCH-SpatialRelationInfo), 1 may equal {0, 1}, and if the UE is not provided with the information indicating use of two PUCCH power control adjustment states or the PUCCH spatial relation information, l may equal 0.

If the UE obtains a TPC command value from DCI format 1_0 or DCI format 1_1, and the UE is provided with the PUCCH spatial relation information, the UE may obtain mapping between a PUCCH spatial relation information ID (pucch-SpatialRelationInfoId) value and a closed-loop index (closedLoopIndex or power adjustment state index 1) by using an index provided by a PUCCH P0 ID (p0-PUCCH-Id in p0-Set in PUCCH-PowerControl in PUCCH-Config). When the UE receives an activation command including a value of the PUCCH spatial relation information ID, the UE may determine, via a link to a corresponding PUCCH P0 ID, a value of the closed-loop index for providing an 1 value.

If the UE is provided with a configuration of a $P_{0\_PUCCH,b,f,c}$ ($q_u$) value for corresponding PUCCH power adjustment state l, by a higher layer, for active UL BWP b on carrier f of serving cell c, $g_{b,f,c}$ (i, 1) = 0, and k = 0, 1, ..., i. If the UE is provided with the PUCCH spatial relation information, the UE may determine, based on the PUCCH spatial relation information associated with a PUCCH P0 ID corresponding to $q_u$ and a closed-loop index value corresponding to l, an 1 value based on the $q_u$ value.

$q_u$ may be a PUCCH P0 ID (p0-PUCCH-Id) indicating PUCCH P0 (P0-PUCCH) in PUCCH P0 set (p0-Set).

<SRS Transmission Power Control>

For example, by using index 1 of a power control adjustment state, transmission power for an SRS ($P_{SRS,b,f,c}$ (i, $d_s$, l)) in sounding reference signal (SRS) transmission occasion i (also referred to as a transmission period or the like) for active UL BWP b on carrier f of serving cell c may be expressed by Equation 3 below.

The power control adjustment state may be referred to as an SRS power control adjustment state, a value based on a TPC command, an accumulated value of a TPC command, a closed-loop value, a first or second state, or the like. 1 may be referred to as a closed-loop index.

SRS transmission occasion i is a certain period in which the SRS is transmitted, and may be constituted by, for example, one or more symbols, one or more slots, or the like.

[Math. 3]

(Equation 3)

$$P_{SRS,b,f,c}(i,q_s,l) = \min \left\{ \begin{array}{l} P_{CMAX,f,c}(i), \\ P_{O\_SRS,b,f,c}(q_s) + 10\log_{10}(2^{\mu} \cdot M_{SRS,b,f,c}(i)) + \alpha_{SRS,b,f,c}(q_s) \cdot PL_{b,f,c}(q_d) + h_{b,f,c}(i,l) \end{array} \right\}$$

In Equation 3, $P_{CMAX,f,c}$ (i) is, for example, UE maximum output power for carrier f of serving cell c in SRS transmission occasion i. $P_{O\_SRS,b,f,c}$ ($q_s$) is a parameter related to target received power (also referred to as, for example, a parameter related to transmission power offset, transmission power offset P0, a target received power parameter, or the like) provided by p0 for active UL BWP b on carrier f of serving cell c and SRS resource set $q_s$ (provided by SRS-

ResourceSet and SRS-ResourceSetId).

$M_{SRS,b,f,c}$ (i) is an SRS bandwidth represented by the number of resource blocks for SRS transmission occasion i on active UL BWP b on carrier f in serving cell c and with subcarrier spacing μ.

$\alpha_{SRS,b,f,c}$ ($q_s$) is provided by α (for example, alpha) for active UL BWP b on carrier f in serving cell c and with subcarrier spacing μ, and for SRS resource set $q_s$.

$PL_{b,f,c}$ ($q_d$) is a DL path loss estimation value [dB] calculated by the UE using RS resource index $q_d$, for an active DL BWP in serving cell c and SRS resource set $q_s$. RS resource index $q_d$ is a path loss reference RS (path loss measurement DL RS, provided by, for example, pathlossReferenceRS) associated with SRS resource set $q_s$, and is an SS/PBCH block index (for example, ssb-Index) or a CSI-RS resource index (for example, csi-RS-Index).

$h_{b,f,c}$ (i, 1) is an SRS power control adjustment state for the active UL BWP on carrier f of serving cell c, and SRS transmission occasion i. When a configuration of the SRS power control adjustment state (for example, srs-Power-ControlAdjustmentStates) indicates the same power control adjustment state for SRS transmission and PUSCH transmission, $h_{b,f,c}$ (i, 1) is current PUSCH power control adjustment state $f_{b,f,c}$ (i, 1).

Transmission occasions i for the PUSCH, the PUCCH, and the SRS may each be defined by slot index $n_{s,f\mu}$ in a frame with a system frame number SFN, first symbol S in a slot, and number L of consecutive symbols. In PUSCH transmission of repetition type B, a PUSCH transmission occasion may be nominal repetition.

(Power Requirements)

For NR, responses to an issue of Maximum Permitted Exposure (MPE) (or electromagnetic power density exposure) are under study. The UE is required to satisfy, for health and safety, Federal Communication Commission (FCC) regulations related to maximum radiation into the human body.

For example, for Rel-15 NR, limitation using power management maximum power reduction (P-MPR, maximum allowed UE output power reduction) is defined to limit exposure (explosure). For example, in a case of non-carrier aggregation (CA), UE maximum output power $P_{CMAX,f,c}$ is configured such that corresponding $P_{UMAX,f,c}$ (maximum output power to be measured, configured maximum UE output power to be measured) satisfies Equation 4 below.

[Math. 4]

$$P_{Powerclass} + \Delta P_{IBE} - \text{MAX}(\text{MAX}(MPR_{f,c}.A - MPR_{f,c}\cdot) + \Delta MB_{P,n}. P - MPR_{f,c}) - \text{MAX}\{T\{\text{MAX}(MPR_{f,c}. A - MPR_{f,c}\cdot)), T(P - MPR_{f,c})\} \leq P_{UMAX,f,c} \leq EIRP_{max} \qquad \text{(Equation 4)}$$

$EIRP_{max}$ is assumed to be a maximum value of corresponding measurement peak effective isotropic radiated power (EIRP). $P\text{-}MPR_{f,c}$ is assumed to be a value indicating reduction of maximum output power allowed for carrier f of serving cell c. $P\text{-}MPR_{f,c}$ is introduced to an equation of UE maximum output power $P_{CMAX,f,c}$ configured for carrier f of serving cell c. Corresponding total radiated power $P_{TMAX, f,c}$ satisfies $P_{TMAX, f,c} \leq TRP_{max}$.

In a case of carrier aggregation (CA), UE maximum output power $P_{CMAX,f,c}$ is configured such that corresponding $P_{UMAX, f,c}$ satisfies Equation 5 below.

[Math. 5]

$$P_{Powerclass} - \text{MAX}(\text{MAX}(MPR, A\text{-}MPR) + \Delta MB_{P,n}. P\text{-}MPR) - \text{MAX}\{T(\text{MAX}(MPR, A\text{-}MPR)), T(P\text{-}MPR)\} \leq P_{UMAX} \leq EIRP_{max} \qquad \text{(Equation 5)}$$

$P_{UMAX}$ measured for the carrier aggregation is defined as $P_{UMAX} = \Sigma_{c,f(c)}P_{UMAX, f,c}$. Here, $P_{UMAX,f,c}$ is a linear value of measured power $P_{UMAX,f,c}$ for carrier f = f(c) of serving cell c. Total radiated power $P_{TMAX}$ measured for the carrier aggregation is defined as $P_{TMAX} = 10\log_{10}\Sigma_{c,f(c)}P_{TMAX,f,c}$. Here, $P_{TMAX}$ is a linear value of a measured value of total radiated power $P_{TMAX,f,c}$ for carrier f = f(c) of serving cell c. For total radiated power $P_{TMAX}$, boundaries are defined such that $P_{TMAX} \leq TRP_{max}$.

In other words, the UE can configure the maximum output power as $P_{CMAX}$ such that measured peak EIRP ($P_{UMAX}$) is within a range of a lower limit to an upper limit and measured total radiated power $P_{TMAX}$ satisfies $P_{TMAX} \leq TRP_{ma}$.

(Analysis)

When multi-panel simultaneous UL transmission is supported, the UE simultaneously transmits ULs from two panels, but transmission power control for each panel remains unclear. For example, it remains unclear how transmission power for a PUSCH/PUCCH/SRS is determined, how maximum output power for each panel is configured, and the like. Therefore, appropriate transmission control for each panel may fail, and communication throughput may be reduced.

Thus, the inventors of the present invention came up with the idea of a radio communication method that can appropriately perform transmission power control for each panel.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, multi-panel simultaneous transmission and multi-panel simultaneous UL transmission may be interchangeably interpreted. In the present disclosure, "supporting" and "being configured/indicated" may be interchangeably interpreted. In the present disclosure, a loop, a power control loop, a power control loop index, a closed-loop, an open loop, and a power control adjustment state may be interchangeably interpreted. In the present disclosure, transmission power and output power may be interchangeably interpreted.

(Radio Communication Method)

<First Embodiment>

{PUSCH/PUCCH/SRS Transmission Power Control}

When UL simultaneous transmission from multi-panel is supported, a UE receives a configuration related to transmission power per panel, and separately controls, based on the configuration, transmission power for each panel to simultaneously transmit UL transmissions (PUSCHs/PUCCHs/SRSs) (in transmission occasion i) by using multi-panel (for example, two panels). For the configuration, higher layer signaling (for example, RRC) / physical layer signaling (for example, TPC command of DCI) or the like may be used, as with existing transmission power control.

Note that unless specified otherwise, transmission power control in the present embodiment may be similar to the PUSCH/PUCCH/SRS transmission power control (transmission power control) described above.

When transmitting a PUSCH from panel p, on active UL BWP b on carrier f of serving cell c, by using a parameter set having index j and index 1 of a power control adjustment state, the UE may determine transmission power for the PUSCH ($P_{PUSCH, b,f,c,p}$ (i, j, $q_d$, l)) in PUSCH transmission occasion i (also referred to as a transmission period or the like), based on Equation 6 below. Note that p is a panel index, and may be configured by higher layer signaling / physical layer signaling.

[Math. 6]

(Equation 6)

$$P_{PUSCH,b,f,c,p}(i,j,q_d,l)$$

$$= min \begin{cases} P_{CMAX_{panel,f,c,p}}(i) \\ P_{O\_PUSCH,b,f,c,p}(j) + 10log_{10}(2^\mu \cdot M_{RB,b,f,c,p}^{PUSCH}(i) + \alpha_{b,f,c,p}(j) \cdot PL_{b,f,c,p}(q_d) + \Delta_{TF,b,f,c,p}(i) + f_{b,f,c,p}(i,l) \end{cases}$$

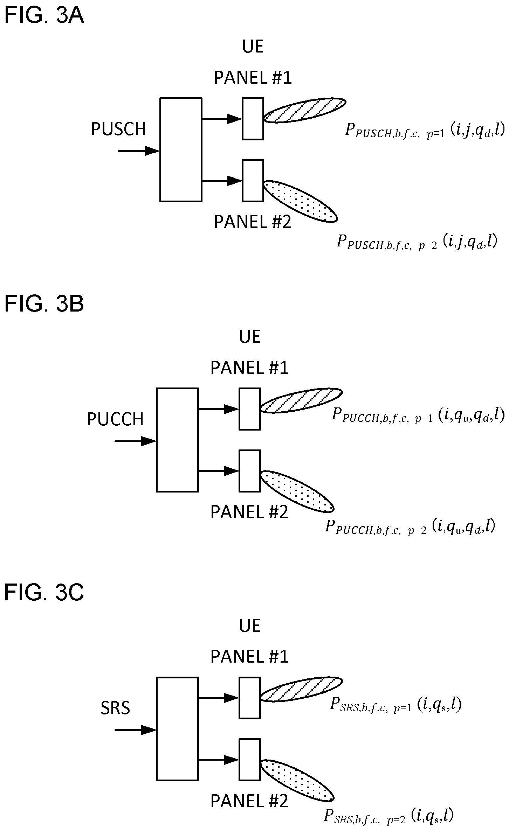

FIG. 3A is a diagram to show an example of the PUSCH simultaneous transmission using two panels. The UE transmits a PUSCH from panel #1 by using transmission power ($P_{PUSCH, b,f,c,p=1}$, (i, j, $q_d$, l)), and transmits a PUSCH from panel #2 by using transmission power ($P_{PUSCH, b,f,c,p=2}$ (i, j, $q_d$, 1)).

The UE may determine transmission power for a PUCCH ($P_{PUCCH, b,f,c,p}$ (i, $q_u$, $q_d$, 1)) in PUCCH transmission occasion i for active UL BWP b on carrier f of serving cell c, by using index 1 of a power control adjustment state, based on Equation 7 below.

[Math. 7]

(Equation 7)

$$P_{PUCCH,b,f,c,p}(i,q_u,q_d,l)$$

$$= min \begin{cases} P_{CMAX_{panel,f,c,p}}(i) \\ P_{O\_PUCCH,b,f,c,p}(q_u) + 10log_{10}(2^\mu \cdot M_{RB,b,f,c,p}^{PUCCH}(i) + \alpha_{b,f,c,p}(j) \cdot PL_{b,f,c,p}(q_d) + \Delta_{F_{PUCCH},p}(F) + \Delta_{TF,b,f,c,p}(i) + g_{b,f,c,p}(i,l) \end{cases}$$

FIG. 3B is a diagram to show an example of the PUCCH simultaneous transmission using two panels. The UE transmits a PUCCH from panel #1 by using transmission power ($P_{PUCCH, b,f,c,p=1}$ (i, $q_u$, $q_d$, 1)), and transmits a PUCCH from panel #2 by using transmission power ($P_{PUCCH,b,f,c,p=2}$ (i, $q_u$, $q_d$, 1)).

The UE may determine transmission power for an SRS ($P_{SRS,b,f,c,p}$ (i $q_s$, l)) in SRS transmission occasion i for active UL BWP b on carrier f of serving cell c, by using index 1 of a power control adjustment state, based on Equation 8 below.

[Math. 8]

(Equation 8)

$$P_{SRS,b,f,c,p}(i,q_s,l) = min \begin{cases} P_{CMAX_{panel,f,c,p}}(i) \\ P_{O\_SRS,b,f,c,p}(q_s) + 10log_{10}(2^\mu \cdot M_{SRS,b,f,c,p}(i) + \alpha_{b,f,c,p}(q_s) \cdot PL_{b,f,c,p}(q_d) + h_{b,f,c,p}(i,l) \end{cases}$$

FIG. 3C is a diagram to show an example of the SRS simultaneous transmission using two panels. The UE transmits an SRS from panel #1 by using transmission power ($P_{SRS,b,f,c,p=1}$ (i, $q_s$, l)), and transmits an SRS from panel #2 by using transmission power ($P_{SRS,b,f,c,p=2}$ (i, $q_s$, l)).

As shown in Equations 6 to 8, the PUSCH/PUCCH/SRS transmission power control differ from the existing control shown in Equations 1 to 3 in that each element is configured for each panel (p). Description of the similarities between these controls will be omitted.

Note that Equations 6 to 8 are merely examples, and are not restrictive. The user terminal needs only to control transmission power for the PUSCH/PUCCH/SRS, based on at least one parameter illustrated in Equations 6 to 8, where an additional parameter may be included or some parameters may be omitted. In Equations 6 to 8 above, transmission power for the PUSCH/PUCCH/SRS is controlled for each active UL BWP b on a certain carrier of a certain serving cell, but the control is not restrictive. At least some of the serving cell, the carrier, the BWP, and the power control adjustment state may be omitted.

Thus, the UE can appropriately perform PUSCH/PUCCH/SRS transmission power control for each panel.

{Maximum Output Power}

An example of configuration of maximum output power (maximum transmit power) $P_{CMAxpanel,f,c,p}$ in panel p on carrier f of serving cell c, included in Equations 6 to 8, will be described.

<<Option 0>>

The UE may receive a configuration related to maximum output power per serving cell and per carrier (for example, the same configuration as that of Rel. 17), and may determine, based on the configuration, maximum output power per panel. For example, the UE may be configured with maximum output power for carrier f of serving cell c, as $P_{CMAX,f,c}$, and may determine maximum output power $P_{CMAX,f,c,p}$ for each panel p, based on $P_{CMAX,f,c}$ or based on a relationship between $P_{CMAX,f,c}$ and $P_{CMAX,f,c,p}$. $P_{CMAX,f,c}$ and the relationship may be configured for the UE by higher layer signaling / physical layer signaling. For the maximum output power per panel in this case, the following examples are conceivable.

<<Option 0-1>>

The UE may determine maximum output power $P_{CMAX,f,c,p}$ for panel p, based on Equation 9 below. N is the number of panels for which simultaneous transmission is indicated. In other words, maximum output powers for the respective panels may be the same.
[Math. 9]

$$(Equation\ 9)$$

$$P_{CMAX,f,c} = N \cdot P_{CMAX_{panel},f,c,p}$$

For example, N may be 2 when multi-panel simultaneous transmission is indicated. N may be 1 when single-panel transmission is indicated. Alternatively, N may follow at least one of a value configured from a network (base station) by using higher layer signaling / physical layer signaling, and a UE capability. Different values may be applied to N in respective ones of the single-panel transmission and the multi-panel transmission. Alternatively, N may be a maximum number of panels supported by the UE in UL transmission (for example, N = 2), and application of the single-panel transmission or the simultaneous multi-panel transmission may not be indicated from the network.

<<Option 0-2>>

The UE may determine maximum output power $P_{CMAX,f,c,p}$ for panel p, based on Equation 10 below. In other words, total maximum output power of maximum output power for each panel p may be maximum output power of the UE. Np is a value for panel p, and may vary for each panel. In other words, maximum output powers for the respective panels may be different.
[Math. 10]

$$(Equation\ 10)$$

$$P_{CMAX,f,c} = N_p \cdot P_{CMAX_{panel},f,c,p}$$

Np may follow at least one of a value configured from the network (base station) by using higher layer signaling / physical layer signaling, and a UE capability. Different values may be applied to Np in respective ones of the single-panel transmission and the multi-panel transmission.

<<Option 0-3>>

The UE may determine maximum output power $P_{CMAX,f,c,p}$ for panel p, based on Equation 11 below. In other words, total maximum output power of maximum output power for each panel p may be maximum output power of the UE. In this case, maximum output powers for the respective panels may be the same or different, or maximum output powers for some panels may be the same.
[Math. 11]

$$(\text{Equation } 11)$$

$$P_{CMAX,f,c} = \sum_p P_{CMAX_{panel},f,c,p}$$

Maximum output power $P_{CMAXpanel,f,c,p}$ for panel p may not be defined in a specification, and the transmission power may be defined by using $P_{CMAX,f,c}$ and Np (or N). For example, when Option 0-2 is applied, the UE may determine PUSCH transmission power for panel p ($P_{PUSCH,b,f,c,p}$ (i, j, $q_d$, l)), based on Equation 12.
[Math. 12]

$$(\text{Equation } 12)$$

$$P_{PUSCH,b,f,c,p}(i,j,q_d,l)$$

$$= min \begin{cases} {}^{1}/_{N_p} \, P_{CMAX,f,c}(i) \\ P_{O\_PUSCH,b,f,c,p}(j) + 10log_{10}(2^{\mu} \cdot M_{RB,b,f,c,p}^{PUSCH}(i) + \alpha_{b,f,c,p}(j) \cdot PL_{b,f,c,p}(q_d) + \Delta_{TF,b,f,c,p}(i) + f_{b,f,c,p}(i,l) \end{cases}$$

Likewise, when Option 0-2 is applied, the UE may determine PUCCH transmission power for panel p ($P_{PUCCH,b,f,c,p}$ (i, $q_u$, $q_d$, l)), based on Equation 13.
[Math. 13]

$$(\text{Equation } 13)$$

$$P_{PUCCH,b,f,c,p}(i,q_u,q_d,l)$$

$$= min \begin{cases} {}^{1}/_{N_p} \, P_{CMAX,f,c}(i) \\ P_{O\_PUCCH,b,f,c,p}(q_u) + 10log_{10}(2^{\mu} \cdot M_{RB,b,f,c,p}^{PUCCH}(i) + \alpha_{b,f,c,p}(j) \cdot PL_{b,f,c,p}(q_d) + \Delta_{F_{PUCCH},p}(F) + \Delta_{TF,b,f,c,p}(i) + g_{b,f,c,p}(i,l) \end{cases}$$

Likewise, when Option 0-2 is applied, the UE may determine SRS transmission power ($P_{SRS,b,f,c,p}$ (i, $q_s$, l)), based on Equation 14.
[Math. 14]

$$(\text{Equation } 14)$$

$$P_{SRS,b,f,c,p}(i,q_s,l) = min \begin{cases} {}^{1}/_{N_p} \, P_{CMAX,f,c}(i) \\ P_{O\_SRS,b,f,c,p}(q_s) + 10log_{10}(2^{\mu} \cdot M_{SRS,b,f,c,p}(i) + \alpha_{b,f,c,p}(q_s) \cdot PL_{b,f,c,p}(q_d) + h_{b,f,c,p}(i,l) \end{cases}$$

Note that when Option 0-1 is applied, Np in Equations 12 to 14 is replaced with N.
Requirements of $P_{Powerclass}$, $\Delta P_{IBE}$, $MPR_{f,c}$, A-$MPR_{f,c}$, $\Delta MB_{P,n}$, P-$MPR_{f,c}$, $EIRP_{max}$, and $TRP_{max}$ in determination of $P_{CMAX,f,c}$ may be newly defined when simultaneous UL transmission in multi-panel is applied. In other words, different requirements may be defined in respective ones of the single-panel transmission and the multi-panel simultaneous transmission.

<<Option 0-4>>

The UE may determine maximum output power $P_{CMAX,f,c,p}$ for panel p, based on Equation 15 below. Maximum transmit power per panel and maximum transmit power for the multi-panel may be the same.
[Math. 15]

(Equation 15)

$$P_{CMAX,f,c} = P_{CMAX_{panel},f,c,p}$$

Thus, maximum output power in panel p, maximum output power for all the panels, and a relationship between them are made clear, and the UE can control multi-panel simultaneous UL transmission by using appropriate transmission power.

[Option 1]

The UE may determine maximum output power $P_{CMAXpanel,f,c,p}$ for each panel p by using a requirement (boundaries) defined based on a peak effective isotropic radiated power (Effective Isotropic Radiated Power (EIRP)) measurement value per UE and a total radiated power measurement value per UE.

<<Non-carrier Aggregation (CA) Power Requirements>>

In a case of non-carrier aggregation (CA), maximum output power $P_{CMAxpanel,f,c,p}$ for each panel p on carrier f of serving cell c is configured such that corresponding peak EIRP measurement value $P_{UMAX,f,c}$ of carrier f and serving cell c satisfies Equation 4, and total radiated power measurement value $P_{TMAX,f,c}$ of carrier f and serving cell c satisfies $P_{TMAX,f,c} \leq TRP_{max}$.

$P_{UMAX,f,c}$ may equal $\Sigma_p P_{UMAX,f,c,p}$. In other words, the peak EIRP measurement value of carrier f of serving cell c may be calculated as the sum of peak EIRP measurement values of a plurality of panels. $P_{UMAX,f,c,p}$ is a measurement value of peak EIRP for panel p.

$P_{TMAX,f,c}$ may equal $\Sigma_p P_{TMAX,f,c,p}$. In other words, the total radiated power measurement value of carrier f of serving cell c may be calculated as the sum of total radiated power measurement values of the plurality of panels. $P_{TMAX,f,c,p}$ is a peak total radiated power measurement value for panel p.

Requirements of $P_{Powerclass}$, $\Delta P_{IBE}$, $MPR_{f,c}$, $A\text{-}MPR_{f,c}$, $\Delta MB_{P,n}$, $P\text{-}MPR_{f,c}$, $EIRP_{max}$, and $TRP_{max}$ may be the same as those in Rel. 17 (in single-panel transmission). Alternatively, these requirements may be newly defined when simultaneous UL transmission in multi-panel is applied. In other words, different requirements may be defined in respective ones of the single-panel transmission and the multi-panel simultaneous transmission.

According to this aspect, maximum output power in panel p, maximum output power for all the panels, and a relationship between them are made clear, and the UE can control multi-panel simultaneous UL transmission by using appropriate transmission power.

<<Carrier Aggregation (CA) Power Requirements>>

In a case of carrier aggregation (CA), maximum output power $P_{CMAxpanel,f,c,p}$ (i) for each panel p on carrier f of serving cell c is configured such that corresponding peak EIRP measurement value $P_{UMAX}$ satisfies Equation 5, and total radiated power measurement value $P_{TMAX}$ satisfies $P_{TMAX} \leq TRP_{max}$.

$P_{UMAX}$ may equal $\Sigma_{c,f(c),p} P_{UMAX,f,c,p}$. In other words, the peak EIRP measurement value may be calculated as the sum of peak EIRP measurement values of a plurality of panels. $P_{UMAX,f,c,p}$ is a measurement value of peak EIRP for panel p.

$P_{TMAX}$ may equal $\Sigma_{c,f(c),p} P_{UMAX,f,c,p}$. In other words, the total radiated power measurement value may be calculated as the sum of total radiated power measurement values of the plurality of panels. $P_{TMAX,f,c,p}$ is a total radiated power measurement value for panel p.

Requirements of $P_{Powerclass}$, $\Delta P_{IBE}$, $MPR_{f,c}$, $A\text{-}MPR_{f,c}$, $\Delta MB_{P,n}$, $P\text{-}MPR_{f,c}$, $EIRP_{max}$, and $TRP_{max}$ may be the same as those in Rel. 17 (in single-panel transmission). Alternatively, these requirements may be newly defined when simultaneous UL transmission in multi-panel is applied. In other words, different requirements may be defined in respective ones of the single-panel transmission and the multi-panel simultaneous transmission.

<<Maximum Output Power>>

The following examples may be applied to a relationship between maximum output power $P_{CMAxpanel,f,c,p}$ configured for the UE with each panel and maximum output power $P_{CMAX,f,c}$ configured for the UE with a carrier of a certain serving cell.

<<<<Option 1-0>>>>

For simultaneous UL transmission in multi-panel, additional limitation defined by a specification may be absent. If the requirements of the peak EIRP measurement value and the total radiated power measurement value described above are satisfied, how to configure maximum output power for each panel may be up to the UE.

<<<<Option 1-1>>>>

Maximum output power $P_{CMAXpanel,f,c,p}$ configured for the UE may be the same in each panel. In other words, maximum output power $P_{CMAXpanel,f,c,p}$ may be defined as Equation 16 below. Note that x may be {0, ..., N-1}.
[Math. 16]

(Equation 16)

$$P_{CMAX_{panel},f,c,p=0} = P_{CMAX_{panel},f,c,p=1} = P_{CMAX_{panel},f,c,p=x}$$

$$P_{CMAX,f,c} = N \cdot P_{CMAX_{panel},f,c,p}$$

N is the number of panels for which simultaneous transmission is indicated, and, for example, N may be 2 when multi-panel simultaneous transmission is indicated, and N may be 1 when single-panel transmission is indicated. N may be a value depending on at least one of a value configured from the network (base station) by using higher layer signaling / physical layer signaling, and a UE capability. Alternatively, N may have different values in respective ones of the single-panel transmission and the multi-panel transmission.

<<<<Option 1-2>>>>

Relationships between maximum output powers $P_{CMAXpanel,f,c,p}$ for different panels configured for the UE may be predefined or may be different from each other. When maximum output power $P_{CMAXpanel,f,c,p}$ varies for each panel, a relationship between UE configured maximum output power for each panel and maximum output power for a carrier of a certain serving cell may be predefined, or may vary for each panel. These relationships may be configured for the UE by higher layer signaling / physical layer signaling. For example, these relationships may be defined as Equation 17.
[Math. 17]

(Equation 17)

$$P_{CMAX_{panel},f,c,p=0} = X_{p=0,p=1} P_{CMAX_{panel},f,c,p=1}$$

$$P_{CMAX,f,c} = N_p \cdot P_{CMAX_{panel},f,c,p}$$

$X_{p=0,p=1}$ defines a relationship between maximum output power for panel #0 (p = 0) and maximum power for panel #1 (p = 1). Np defines a relationship between maximum output power for panel p and maximum output power for a carrier of a corresponding serving cell. $X_{p=0,p=1}$ and Np may each be a value depending on at least one of a value configured from the network (base station) by using higher layer signaling / physical layer signaling, and a UE capability. $X_{p=0,=1}$ and Np may each have different values in respective ones of the single-panel transmission and the multi-panel transmission.
With Option 1, a power requirement (limitation) per terminal and maximum output power in a case of multi-panel simultaneous UL transmission are made clear, and the UE can appropriately control transmission power.

[Option 2]

The UE may determine maximum output power $P_{CMAXpanel,f,c,p}$ for each panel p by using a requirement (boundaries) defined based on a peak effective isotropic radiated power (EIRP) measurement value per panel and a total radiated power measurement value per panel. For maximum output power $P_{CMAXpanel,f,c,p}$ for each panel p configured for the UE, $P_{UMAXpanel,f,c,p}$ that is measurement peak EIRP per corresponding panel satisfies a requirement (boundaries) of Equation 18 below. In this case, total radiated power $P_{TMAXpanel,f,c,p}$ per panel satisfies $P_{TMAXpanel,f,c,p} \leq$

$TRP_{MAX,p}$.
[Math. 18]

$P_{powerclass,p}$ + $\Delta P_{IBE,p}$ - MAX(MAX($MPR_{f,c,p}$, A- $MPR_{f,c,p}$) + $\Delta MB_{P,n,p}$, P-$MPR_{f,c,p}$) - MAX {T(MAX($MPR_{f,c,p}$, A- $MPR_{f,c,p}$,), T(P-$MPR_{f,c,p}$))} $\leq P_{UMAXpanel,f,c,p} \leq EIRP_{max,p}$  (Equation 18)

Requirements of parameters such as $P_{Powerclass}$, $\Delta P_{IBE}$, $MPR_{f,c}$, A-$MPR_{f,c}$, $\Delta MB_{P,n}$, P-$MPR_{f,c}$, $EIRP_{max}$, and $TRP_{max}$ may be defined for each panel. Alternatively, for the requirements, different requirements may be defined in respective ones of the single-panel transmission and the multi-panel transmission. Alternatively, requirements per Rel-17 UE may be reused, and requirements for each panel for the multi-panel simultaneous transmission may be the same as the requirements for the Rel-17 UE. Alternatively, the requirements may vary for each panel, and may depend on a UE capability. Some of these parameters may be predefined as zero.

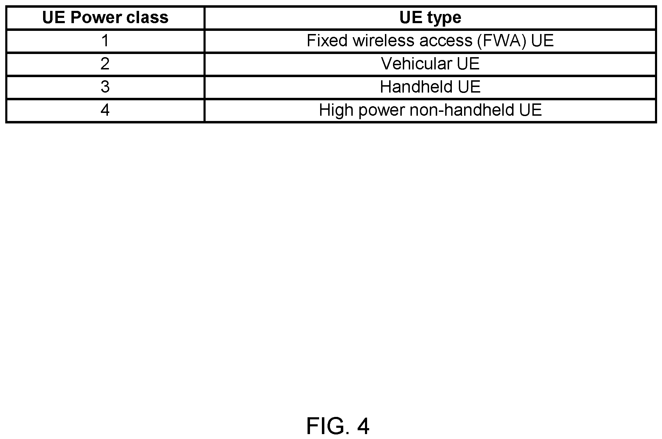

Different configuration/determination methods for maximum output power $P_{CMAXpanel,f,c,p}$ for each panel p may be applied to different UE types / UE power classes (see, for example, FIG. 4). Note that a new UE type / UE power class (different from that for single-panel UL transmission) may be defined for the UE that performs multi-panel simultaneous UL transmission.

With Option 2, a power requirement (limitation) per panel in a case of multi-panel simultaneous UL transmission are made clear, and the UE can appropriately control transmission power.

<Second Embodiment>

Maximum output power $P_{CMAXpanel,f,c,p}$ for each panel (panel p) configured for a UE is calculated in a manner similar to that in the first embodiment. When simultaneous uplink (UL) transmission from multi-panel is supported, the UE transmits (reports) information (value) indicating the maximum output power in a transmission power margin media access control control element (Power Headroom Report Medium Access Control Control Element (PHR MAC CE)), and controls, based on the maximum output power, UL transmission. The UE may transmit (report) at least one of the following respective options by using a PHR MAC CE or a MAC CE other than the PHR MAC CE.

[Option 1]

The UE may report configured maximum output power $P_{CMAX,f,c}$ for a serving cell. The maximum output power for the serving cell configured for the UE may be the sum of maximum output power $P_{CMAXpanel,f,c,p}$ for multi-panel configured for the UE (Equation 19).
[Math. 19]

$$(\text{Equation 19})$$

$$P_{CMAX,f,c} = \sum_p P_{CMAX_{panel},f,c,p}$$

In a case of single-panel transmission, the maximum output power for the serving cell configured for the UE may be the same as maximum output power for a panel configured for the UE, the panel being used for the transmission.

[Option 2]

The UE may report configured maximum output power $P_{CMAXpanel,f,c,p}$ or a value related to maximum output power $P_{CMAXpanel,f,c,p}$.

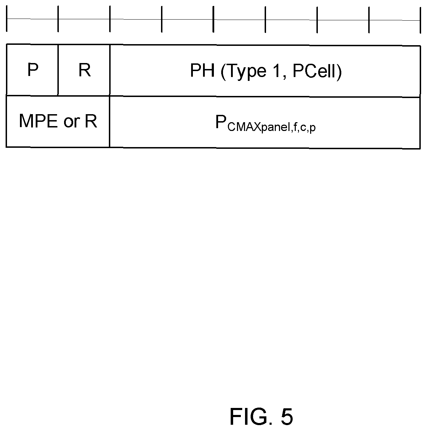

FIG. 5 is a diagram to show an example of the PHR MAC CE including maximum output power $P_{CMAXpanel,f,c,p}$ per panel. "PH" in FIG. 5 indicates a Power Headroom level. "MPE" indicates applied power backoff for satisfying an MPE requirement when a P field is set to 1. The example in FIG. 5 corresponds to a single entry, but a plurality of pieces of $P_{CMAXpanel,f,c,p}$ per panel may be included in a case of multiple entries. $P_{CMAXpanel,f,c,p}$ in FIG. 5 may be replaced with a value according to any one of Options 2-1 to 2-5 described below.

<<Option 2-1>>

The UE may report a value of maximum output power $P_{CMAXpanel,f,c,p}$ per panel.

<<Option 2-2>>

The UE may report one common value $P_{CMAXpanel,f,c,p}$ for each panel, based on the assumption that maximum output power $P_{CMAXpanel,f,c,p}$ per panel is the same.

<<Option 2-3>>

The UE may report a maximum value of maximum output power $P_{CMAXpanel,f,c,p}$ per panel (referred to as, for example, $max_p P_{CMAXpanel,f,c,p}$).

<<Option 2-4>>

The UE may report a minimum value of maximum output power $P_{CMAXpanel,f,c,p}$ per panel (referred to as, for example, $min_p P_{CMAXpanel,f,c,p}$).

<<Option 2-5>>

When single-panel transmission is indicated, the UE may report maximum output power for an indicated panel for the transmission.

The UE may use different options from among the above options in a case where single-panel transmission is indicated and a case where multi-panel simultaneous transmission is indicated.

The UE may report the value described in each option above by using a new MAC CE in place of an existing PHR MAC CE.

According to the present embodiment, maximum output power per panel is transmitted (reported) for each panel, thereby allowing appropriate configuration related to transmission power to be received for each panel.

<Analysis>

For Rel. 17, support of two power control loops for each serving cell is under study.

In a case of a PUSCH, an index of a power control loop (closed-loop, power control adjustment state) is associated with a TCI state (if provided) or an SRI.

In a case of a PUCCH, an index of a power control loop is associated with a TCI state (if provided) or a PUCCH spatial relation.

In a case of an SRS, an index of a power control loop may be associated with a TCI state (if provided). Alternatively, an indication of whether closed-loop power control (closed-loop index) for the SRS is the same as power control loop index 0 for the PUSCH or power control loop index 1 for the PUSCH or is a power control loop different from that for the PUSCH may be provided for each SRS resource set.

The closed-loop power control for the SRS represents $h_{b,f,c}(i, l)$ in Equation 3. When it is indicated that the closed-loop power control for the SRS is the same as power control loop index 1 for the PUSCH, $h_{b,f,c}(i, 1)$ may equal $f_{b,f,c}(i, 1)$. Note that $f_{b,f,c}(i, l)$ is included in Equation 1, and relates to closed-loop power control for the PUSCH.

Here, a study has not been sufficiently made on how the number of power control loops is configured when maximum output power for a panel configured for the UE varies in single-panel transmission or multi-panel transmission, and thus will be made in the following third embodiment.

<Third Embodiment>

The present embodiment describes control in a case where multi-panel UL simultaneous transmission is supported and dynamic switching between single-panel transmission and multi-panel simultaneous transmission is supported. A power control loop and a power control loop index (1) may be interchangeably interpreted. A UE may report, as a UE capability, a power control loop to be supported, or may be configured with the power control loop by higher layer signaling / physical layer signaling.

{Number of Power Control Loops}

The UE may support up to N power control loops for a serving cell. N may be different (greater than that of Rel. 17) from N in Rel. 17 (N = 2). For example, the UE may support a plurality of power control loops, may support at least one power control loop for single-panel transmission, and may support at least one power control loop for multi-panel simultaneous transmission.

For example, when N = 4, the UE may support two power control loops for single-panel transmission and may support two power control loops for multi-panel simultaneous transmission.

For example, when N = 3, the UE may support two (or one) power control loops for single-panel transmission and may support one (or two) power control loop for multi-panel simultaneous transmission.

For example, when N = 2, the UE may support one power control loop for single-panel transmission and may support one power control loop for multi-panel simultaneous transmission.

{Power Control Loop for PUSCH}

In a case of a PUSCH, two indices of a power control loop may be associated with a TCI state (if provided). Alternatively, two indices of the power control loop may be associated with an SRI value.

{Power Control Loop for PUCCH}

In a case of a PUCCH, two indices of a power control loop may be associated with a TCI state (if provided). Alternatively, two indices of the power control loop may be associated with a PUCCH spatial relation.

{Power Control Loop for SRS}

In a case of an SRS, two indices of a power control loop may be associated with a TCI state (if provided). Alternatively, two indications of whether closed-loop power control (closed-loop index) for the SRS is the same as power control loop index 0 for the PUSCH or index 1 for the PUSCH or is a power control loop different from that for the PUSCH may be provided for each SRS resource set. One of the indications may be transmitted for single-panel transmission, and the other indication may be used for multi-panel simultaneous transmission. The other indication may be transmitted for one panel of multi-panel (for example, panel #1 or #2).

{Others}

In the PUSCH/PUCCH/SRS, one index of the power control loop may be used for single-panel transmission, and one different index may be used for multi-panel simultaneous transmission. The different index may be used for one panel of the multi-panel (for example, panel #1 or #2).

The power control loop for the PUSCH/PUCCH/SRS may be associated with a panel ID. The power control loop may be specified (counted) by a TPC command associated with a panel ID. The TPC field may be 1 field (same as that of Rel. 15), or a plurality of fields may be applied to indicate a plurality of panel IDs.

According to the present embodiment, the number of power control loops and association between the power control loops are made clear, and the UE can appropriately perform power control by using a power control loop.

<$\Delta_{\text{TF,b,f,c}}$ (i) for PUSCH>

An example of a method for calculating $\Delta_{\text{TF,b,f,c}}(i)$ that is a transmission power adjustment component for PUSCH for UL BWP b on carrier f of serving cell c will be described. $\Delta_{\text{TF,b,f,c}}(i)$ for PUSCH is expressed as Equation 20. In Equation 20, $K_S$ = 1.25, and $\Delta_{\text{TF,b,f,c}}(i)$ = 0 when $K_S$ = 0. $K_S$ is provided as a higher layer parameter (deltaMCS) for each UL BWP b, each carrier f, and serving cell c. $\Delta_{\text{TF,b,f,c}}(i)$ may equal 0 when PUSCH transmission includes more than 1 layer.
[Math. 20]

$$(\text{Equation 20})$$

$$\Delta_{\text{TF},b,f,c}(i) = 10\log_{10}\left(\left(2^{\text{BPRE}\cdot K_s} - 1\right) \cdot \beta_{\text{offset}}^{\text{PUSCH}}\right)$$

Bits per resource element (BPRE) in Equation 20 is expressed as Equation 21 when being used for a PUSCH including UL-SCH data.
[Math. 21]

(Equation 21)

$$BPRE = \sum_{r=0}^{C-1} K_r / N_{RE}$$

The BPRE in Equation 20 is expressed as Equation 22 when being used for a PUSCH for CSI transmission, the PUSCH not including UL-SCH data.
[Math. 22]

(Equation 22)

$$BPRE = Q_m \cdot R / \beta_{offset}^{PUSCH}$$

C, $K_r$, and $N_{RE}$ in Equation 21 are the number of transmission code blocks, a size of code block r, and the number of resource elements expressed as Equation 23, respectively.
[Math. 23]

(Equation 23)

$$N_{RE} = N \cdot M_{RB,b,f,c}^{PUSCH}(i) \cdot \sum_{j=0}^{N_{symb,b,f,c}^{PUSCH}(i)-1} N_{sc,data}^{RB}(i,j), \text{ where } N \geq 1$$

In Equation 20, $\beta_{offset}^{PUSCH} = 1$ when the PUSCH includes UL-SCH data, and $\beta_{offset}^{PUSCH} = \beta_{offset}^{CSI,1}$ when the PUSCH does not include UL-SCH data and includes CSI.
$Q_m$ and R in Equation 22 are a modulation order and a target coding rate, respectively.

<$\Delta_{TF,b,f,c}$ (i) for PUCCH>

An example of a method for calculating $\Delta_{TF,b,f,c}(i)$ that is a transmission power adjustment component for PUCCH for UL BWP b on carrier f of serving cell c will be described. $\Delta_{TF,b,f,c}(i)$ for PUCCH is expressed as Equation 24 when PUCCH transmission uses PUCCH format 0 or 1.
[Math. 24]

(Equation 24)

$$\Delta_{TF,b,f,c}(i) = 10 \log_{10}\left( \frac{N_{ref}^{PUCCH}}{N_{symb}^{PUCCH}(i)} \right) + \Delta_{UCI}(i)$$

$N_{symb}^{PUCCH}(i)$ is the number of symbols for PUCCH format 0 or 1 in PUCCH transmission. $N_{ref}^{PUCCH} = 2$ in a case of PUCCH format 0, and $N_{ref}^{PUCCH} = N_{symb}^{slot}$ in a case of PUCCH format 1. $\Delta_{UCI}(i) = 0$ in a case of PUCCH format 0, and $\Delta_{UCI}(i) = 10\log10(O_{UCI}(i))$ in a case of PUCCH format 1. $O_{UCI}(i)$ is the number of UCI bits in PUCCH transmission occasion i.
$\Delta_{TF,b,f,c}(i)$ for PUCCH is expressed as Equation 25 when PUCCH transmission uses PUCCH format 2, 3, or 4 and the number of UCI bits is 11 or less.
[Math. 25]

(Equation 25)

$$\Delta_{TF,b,f,c}(i) = 10 \log_{10}\left( K_1 \cdot \left( n_{HARQ-ACK}(i) + O_{SR}(i) + O_{CSI}(i) \right) / N_{RE}(i) \right)$$

In Equation 25, $K_1 = 6$. $n_{HARQ-ACK}(i)$ is the number of HARQ-ACK information bits determined by the UE. $O_{SR}(i)$ is the number of SR information bits determined by the UE. $O_{CSI}(i)$ is the number of CSI information bits determined by the UE. $N_{RE}(i)$ is the number of resource elements.
$\Delta_{TF,b,f,c}(i)$ for PUCCH is expressed as Equation 26 when PUCCH transmission uses PUCCH format 2, 3, or 4 and the number of UCI bits is greater than 11. In Equation 26, $K_2 = 2.4$.
[Math. 26]

$$\text{(Equation 26)}$$

$$\Delta_{TF,b,f,c}(i) = 10\log_{10}\left(2^{K_2 \cdot BPRE(i)} - 1\right)$$

BPRE(i) is expressed as Equation 27. $O_{ACK}(i)$ indicates the number of HARQ-ACK information bits determined by the UE. $O_{SR}(i)$ is the number of SR information bits determined by the UE. $O_{CSI}(i)$ is the number of CSI information bits determined by the UE. $O_{CRC}(i)$ is the number of CRC information bits determined by the UE. $N_{RE}(i)$ is the number of resource elements.
[Math. 27]

$$\text{(Equation 27)}$$

$$BPRE(i) = \left(O_{ACK}(i) + O_{SR}(i) + O_{CSI}(i) + O_{CRC}(i)\right)/N_{RE}(i)$$

$<\Delta_{F\_PUCCH,p}(F)$ for PUCCH>

$\Delta_{F\_PUCCH,p}(F)$ is determined based on an RRC parameter. $\Delta_{F\_PUCCH,p}(F)$ is based on parameters such as deltaF-PUCCH-f0 for PUCCH format 0, or deltaF-PUCCH-f1 for PUCCH format 1, deltaF-PUCCH-f2 for PUCCH format 2, deltaF-PUCCH-f3 for PUCCH format 3, and deltaF-PUCCH-f4 for PUCCH format 4, if provided. When these parameters are not provided, $\Delta_{F\_PUCCH,p}(F) = 0$.

<Fourth Embodiment>

At least one of the parameters used for PUSCH power control, described in Equation 1, (for example, $P_{O\_PUSCH,b,f,c}(j)$, $\alpha_{b,f,c}(j)$, PUSCH power control adjustment state index l, index $q_d$ of a path loss reference RS) may be associated with a transmission configuration indication (TCI) state of a PUSCH or an SRI of the PUSCH (indicator of an SRS resource corresponding to the PUSCH or spatial relation information corresponding to the PUSCH).
At least one of the parameters used for PUCCH power control, described in Equation 2, (for example, $P_{O\_PUCCH,b,f,c}(q_u)$, PUCCH power control adjustment state index l, index $q_d$ of a path loss reference RS) may be associated with a TCI state of a PUCCH or spatial relation information of the PUCCH.
At least one of the parameters used for SRS power control, described in Equation 3, (for example, $P_{O\_SRS,b,f,c}(q_s)$, $\alpha_{SRS,b,f,c}(q_s)$, SRS power control adjustment state index l, index $q_d$ of a path loss reference RS) may be associated with a TCI state of an SRS and may be provided for SRS resource set $q_s$. At least one of the parameters may be similar to that of Rel. 17.
$M^{PUSCH}_{RB,b,f,c,p}(i)$, $M^{PUCCH}_{RB,b,f,c,p}(i)$, and $M_{SRS,b,f,c,p}(i)$ for panel p in Equations 6 to 8 are bandwidths for PUSCH/PUCCH/SRS associated with panel p, and are each expressed as the number of RBs.
$\Delta_{TF,b,f,c,p}(i)$ for panel p in Equation 6 may be calculated based on the number of layers, the number of transmission code blocks, a code block size, and the number of resource elements for PUSCH transmission associated with panel p.
In equation 7, $\Delta_{F\_PUCCH,p}(F)$ and $\Delta_{TF,b,f,c,p}(i)$ (for PUCCH) for panel p may be computed based on a PUCCH format, the number of UCI bits, and the number of resource elements for PUCCH transmission associated with panel p.
According to the present embodiment, association between a power control parameter for the PUSCH/-PUCCH/SRS and another parameter is made clear, and the UE can appropriately perform power control.

<Linear Value of Transmission Power>

For a codebook PUSCH other than a PUSCH scheduled by DCI 0_0, linear value $P^-_{PUSCH,b,f,c}(i, j, q_d, 1)$ is scaled by coefficient s that varies depending on a full-power transmission mode, the number of antenna ports, and the number of SRS ports. Here, $P^-$ represents a variable obtained by adding an overline to P, and may also be referred to as a P bar. The UE equally divides power among antenna ports with which the UE transmits the PUSCH at non-zero power.
For PUSCH transmission in active UL BWP b, carrier f, and serving cell c, the UE first calculates linear value $P^-_{PUSCH,b,f,c}(i, j, q_d, 1)$ of transmission power $P_{PUSCH,b,f,c}(i, j, q_d, l)$. A case where txConfig in PUSCH-Config is set to "codebook" in a case of PUSCH transmission scheduled by a DCI format other than DCI format 0_0, or transmission configured by ConfiguredGrantConfig or semiPersistentOnPUSCH will be described.

When ul-FullPowerTransmission in PUSCH-Config is provided, the UE scales $P\text{-}_{PUSCH,b,f,c}(i, j, q_d, 1)$ by using s.

When ul-FullPowerTransmission in PUSCH-Config is set to fullpowerMode1, and each SRS resource of SRS-ResourceSet configured for "codebook" usage includes a plurality of SRS ports, s is the ratio of the number of antenna ports for non-zero PUSCH transmission power to a maximum number of SRS ports supported by the UE in one SRS resource.

When ul-FullPowerTransmission in PUSCH-Config is set to fullpowerMode2, (1) and (2) below are employed.

(1) s = 1 in a case of a full power TPMI reported by the UE. s is the ratio of the number of antenna ports with non-zero PUSCH transmission power to the number of SRS ports with a remaining TPMI. When SRS-ResourceSet is configured with a plurality of SRS resources and is configured for "codebook" usage, the number of SRS ports is associated with an SRS resource indicated by an SRI field of the DCI format for scheduling the PUSCH transmission. Alternatively, when only one SRS resource is indicated by a type 1 configured grant, or SRS-ResourceSet is configured with only one SRS resource and is configured for "codebook" usage, the number of SRS ports is associated with an SRS resource.

(2) When a plurality of SRS resources are provided in SRS-ResourceSet configured for "codebook" usage, when a plurality of SRS resources are indicated by a type 1 configured grant, or when only an SRS resource with a single port is provided in SRS-ResourceSet configured for "codebook" usage, s = 1 if an SRS resource with a single port is indicated in an SRI field of the DCI format for scheduling the PUSCH transmission.

When ul-FullPowerTransmission in PUSCH-Config is set to fullpower, s = 1.

When ul-FullPowerTransmission in PUSCH-Config is not provided, and each SRS resource in SRS-ResourceSet configured for "codebook" usage includes a plurality of SRS ports, the UE scales the above linear value $P\text{-}_{PUSCH,b,f,c}(i, j, q_d, 1)$ with the ratio of the number of antenna ports with non-zero PUSCH transmission power to a maximum number of SRS ports supported by the UE in one SRS resource.

The UE may equally divide power among antenna ports with which the UE transmits the PUSCH at non-zero power.

Received power is equally distributed among the antenna ports even when a UL MIMO codebook is [1 0 0 0]. In other words, the received power is 25% of $P_{cMax}$. Thus, full power enhancement is supported in Rel. 16.

<Fifth Embodiment>

{Configuration of Coefficient s}

A UE determines PUSCH transmission power for each panel in accordance with the above methods according to the respective embodiments. The UE scales the PUSCH transmission power with coefficient s. A full-power transmission mode (fullpowerMode1, fullpowerMode2, fullpower) may be configured for each panel.

When fullpowerMode1 is configured for a panel, coefficient s is the ratio of the number of antenna ports corresponding to non-zero power PUSCH transmission associated with the panel to a maximum number of SRS ports supported by the panel in one SRS resource.

When fullpowerMode2 is configured for the panel, s = 1 for a full power TPMI reported by the UE. For a remaining TPMI, s is the ratio of the number of antenna ports corresponding to non-zero power PUSCH transmission associated with the panel to the number of SRS ports. The number of SRS ports is the number of SRS ports for an SRS resource indicated for the PUSCH transmission and associated with the panel. When the SRS resource indicated for the PUSCH transmission and associated with the panel is a single port, s = 1. The full power TPMI may be reported for each panel.

When full power is configured for the panel, s = 1. For a panel without configuration of a full power mode, s is the ratio of the number of antenna ports corresponding to non-zero power PUSCH transmission associated with the panel to a maximum number of SRS ports supported by the panel in one SRS resource. The UE equally divides power for the panel among antenna ports associated with a panel with which a PUSCH is transmitted at non-zero power.

{Distribution of Transmission Power}

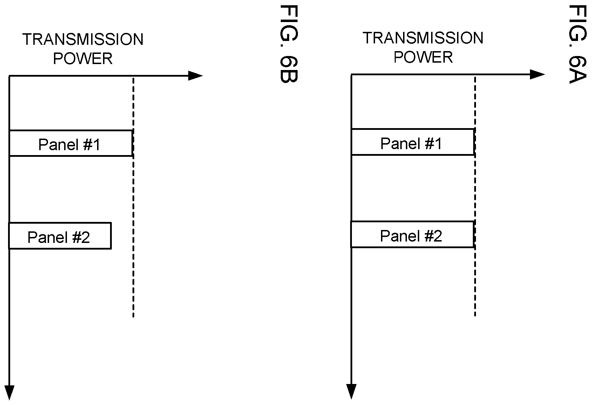

When transmission power is calculated for each UE (Option 1 in the first embodiment), transmission (output) power (maximum transmission (output) power) may be equally distributed among respective transmission antenna ports / transmission panels (FIG. 6A). Alternatively, when transmission power is calculated for each UE, transmission power (maximum transmit power) may be unequally distributed among the respective transmission antenna ports / transmission panels (FIG. 6B). The ratio between transmission powers of the respective transmission antenna ports / transmission panels may be configured by higher layer signaling / physical layer signaling, or may be configured/determined depending on a reported UE capability.

When transmission power is calculated for each panel (Option 2 in the first embodiment), transmission (output) power (maximum transmission (output) power) may be equally distributed among respective transmission antenna ports / transmission panels (FIG. 6A), or may be unequally distributed among the respective transmission antenna ports / transmission panels (FIG. 6B).

According to the present embodiment, the UE can appropriately distribute output power among multiple panels.

<Others>

When dynamic switching between single-panel transmission/reception and multi-panel simultaneous transmission/reception is supported, and single-panel transmission is indicated, at least one of the respective examples of the present disclosure may be employed, or power control of Rel. 17 may be employed.

<UE Capability>

The UE may transmit (report), to a network (base station), UE capability information indicating whether the UE supports at least one of the respective examples of the present disclosure. The UE may receive an indication/configuration related to at least one of the respective examples of the present disclosure (for example, an indication/configuration of enabling/disabling) via higher layer signaling / physical layer signaling. The indication/configuration may correspond to the UE capability information transmitted by the UE. At least one of the respective examples of the present disclosure may be employed only in the UE that has received the indication/configuration, the UE that has transmitted the corresponding UE capability information, or the UE that supports the corresponding UE capability. The UE capability information may be, for example, at least one of (1) to (8) below.

(1) Whether UE supports power control per panel
(2) Number of power control loops (power control loop indices) supported by UE
(3) Total number of single-panel transmissions and multi-panel simultaneous transmissions supported by UE
(4) Number of single-panel transmissions supported by UE
(5) Number of multi-panel simultaneous transmissions supported by UE
(6) Whether UE supports fully/partially (full)/non- overlapping PUSCH resource allocation
(7) Whether UE supports full-power transmission mode for each panel
(8) Whether UE supports full power TPMI in each panel in case of fullpowerMode2

(Supplementary Note)

With respect to one embodiment of the present disclosure, supplementary notes of the following inventions are added.

{Supplementary Note 1}

A terminal including:

a receiving section that, when uplink (UL) simultaneous transmission from multiple panels is supported, receives a configuration related to transmission power per panel; and
a control section that controls, based on the configuration, UL transmission power for each panel.

{Supplementary Note 2}

The terminal according to supplementary note 1, wherein

the receiving section receives a configuration related to maximum output power per serving cell and per carrier, and
the control section determines, based on the configuration related to the maximum output power, maximum output power per panel.

{Supplementary Note 3}

The terminal according to supplementary note 1 or 2, wherein
the control section determines maximum output power for each panel by using a requirement defined based on a peak effective isotropic radiated power (EIRP) measurement value per terminal and a total radiated power measurement value per terminal.

{Supplementary Note 4}

The terminal according to any one of supplementary notes 1 to 3, wherein
the control section determines maximum output power for each panel by using a requirement defined based on a peak effective isotropic radiated power (EIRP) measurement value per panel and a total radiated power measurement value per panel.

(Supplementary Note)

With respect to one embodiment of the present disclosure, supplementary notes of the following inventions are added.

{Supplementary Note 1}

A terminal including:

a transmitting section that transmits, when uplink (UL) simultaneous transmission from multiple panels is supported, information indicating maximum output power per panel by using a Power Headroom Report Medium Access Control Control Element (PHR MAC CE); and
a control section that controls the UL simultaneous transmission, based on the maximum output power.

{Supplementary Note 2}

The terminal according to supplementary note 1, wherein
when dynamic switching between single-panel reception and multi-panel simultaneous reception is supported, the control section supports at least one power control loop for single-panel transmission and supports at least one power control loop for multi-panel simultaneous transmission.

{Supplementary Note 3}

The terminal according to supplementary note 1 or 2, wherein
at least one of parameters used for physical uplink shared channel (PUSCH) power control is associated with a transmission configuration indication (TCI) state or a sounding reference signal resource indicator (SRI) of the PUSCH, at least one of parameters used for physical uplink control channel (PUCCH) power control is associated with a TCI state or spatial relation information of the PUCCH, and at least one of parameters used for sounding reference signal (SRS) power control is associated with a TCI state of the SRS.

{Supplementary Note 4}

The terminal according to any one of supplementary notes 1 to 3, wherein
output power is equally distributed among respective transmission antenna ports or respective panels.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

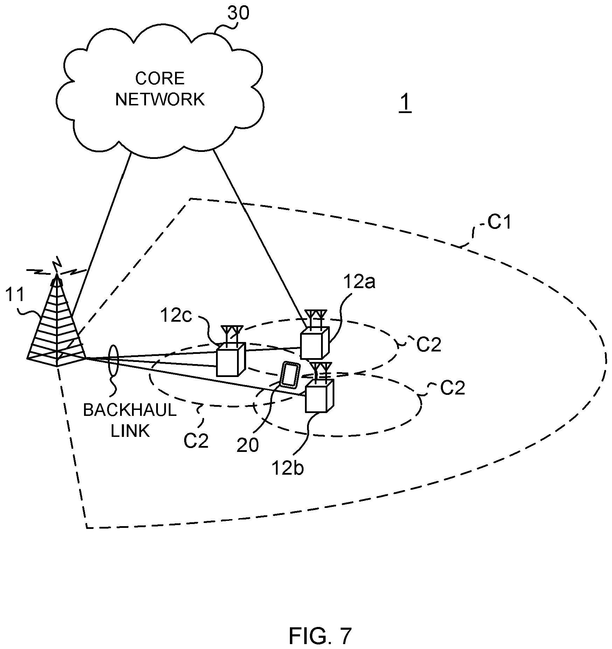

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

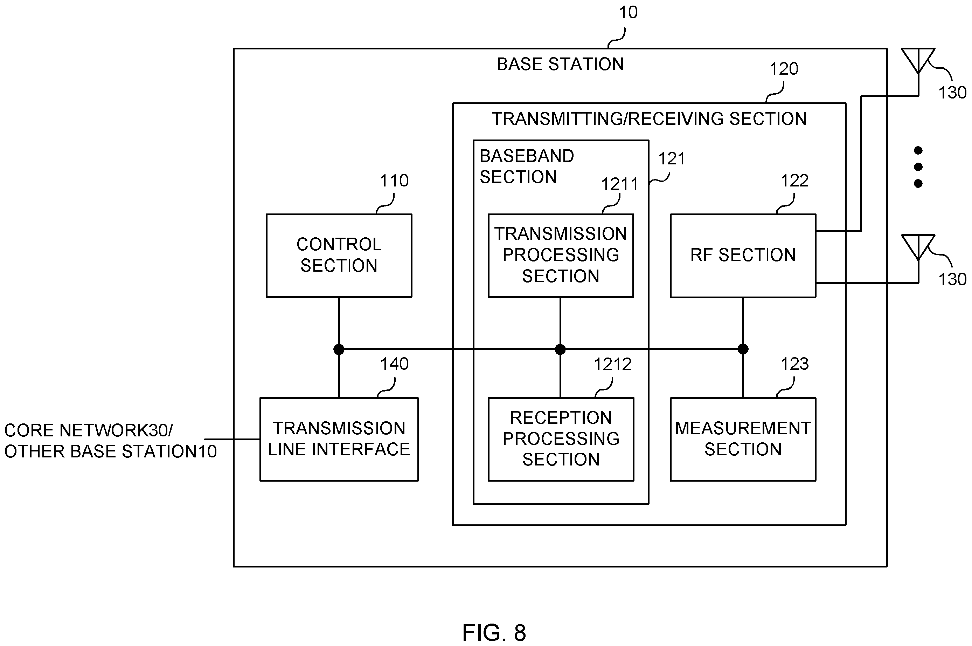

FIG. 8 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may, when uplink (UL) simultaneous transmission from multiple panels is supported, transmit a configuration related to transmission power per panel. The control section 110 may control reception of a UL signal using UL transmission power of a terminal, the UL transmission power being controlled for each panel, based on the configuration.

Note that when uplink (UL) simultaneous transmission from multiple panels is supported, the transmitting/receiving section 120 may receive information indicating maximum output power per panel by using a Power Headroom Report Medium Access Control Control Element (PHR MAC CE). The control section 110 may control reception of the UL simultaneous transmission transmitted based on the maximum output power.

(User Terminal)

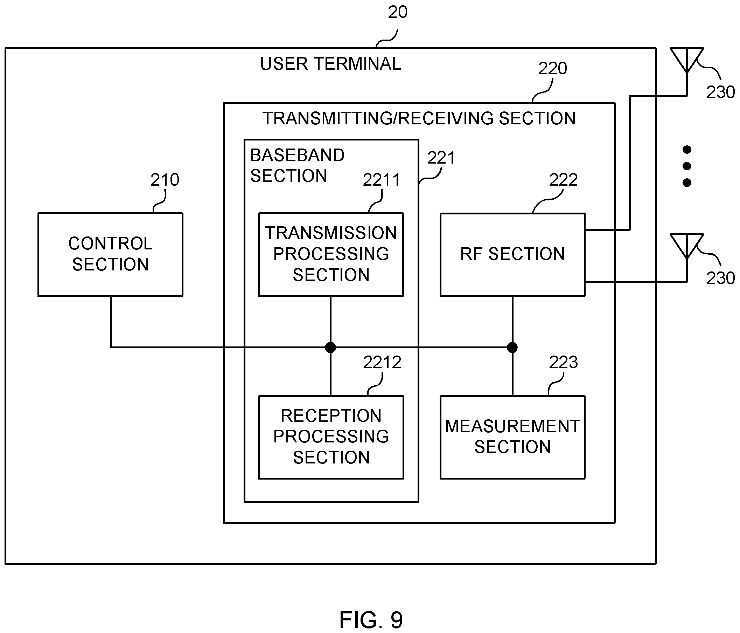

FIG. 9 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may, when uplink (UL) simultaneous transmission from multiple panels is supported, receive a configuration related to transmission power per panel. The control section 210 may control, based on the configuration, UL transmission power for each panel.

The transmitting/receiving section 220 may receive a configuration related to maximum output power per serving cell and per carrier. The control section 210 may determine, based on the configuration related to the maximum output power, maximum output power per panel.

The control section 210 may determine maximum output power for each panel by using a requirement defined based on a peak effective isotropic radiated power (EIRP) measurement value per terminal and a total radiated power measurement value per terminal.

The control section 210 may determine maximum output power for each panel by using a requirement defined based on a peak effective isotropic radiated power (EIRP) measurement value per panel and a total radiated power measurement value per panel.

When uplink (UL) simultaneous transmission from multiple panels is supported, the transmitting/receiving section 220 may transmit information indicating maximum output power per panel by using a Power Headroom Report Medium Access Control Control Element (PHR MAC CE). The control section 210 may control the UL simultaneous transmission, based on the maximum output power.

When dynamic switching between single-panel reception and multi-panel simultaneous reception is supported, the control section 210 may support at least one power control loop for single-panel transmission and may support at least one power control loop for multi-panel simultaneous transmission.

At least one of parameters used for physical uplink shared channel (PUSCH) power control may be associated with a transmission configuration indication (TCI) state or a sounding reference signal resource indicator (SRI) of the PUSCH, at least one of parameters used for physical uplink control channel (PUCCH) power control may be associated with a TCI state or spatial relation information of the PUCCH, and at least one of parameters used for sounding reference signal (SRS) power control may be associated with a TCI state of the SRS. Output power may be equally distributed among respective transmission antenna ports or respective panels.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

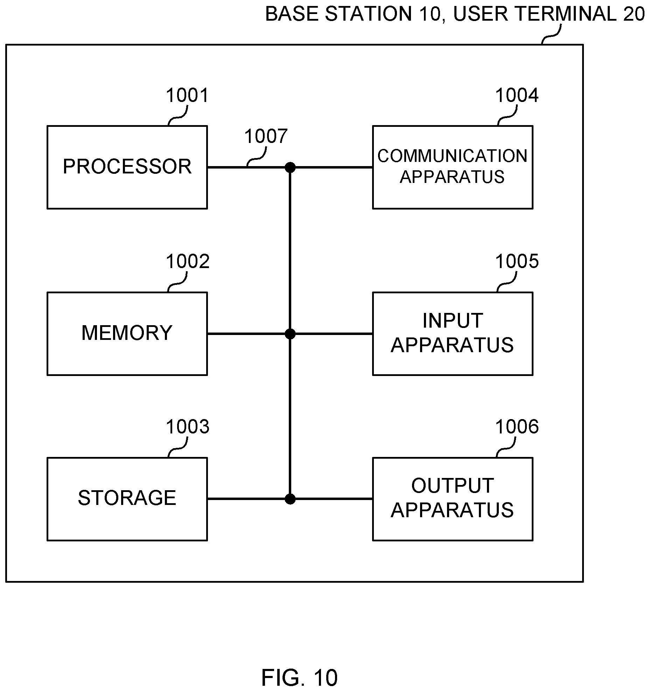

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power/transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a case that a base station transmits information to a terminal may be interpreted as a case that the base station indicates, for the terminal, control/operation based on the information, and vice versa.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

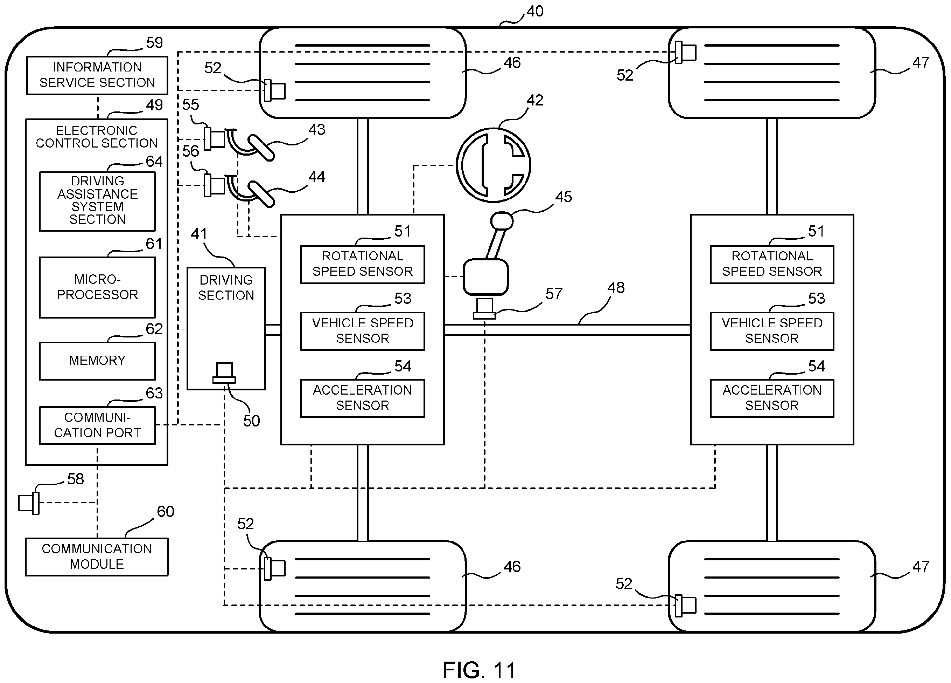

FIG. 11 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:

   a receiving section that, when uplink (UL) simultaneous transmission from multiple panels is supported, receives a configuration related to transmission power per panel; and
   a control section that controls, based on the configuration, UL transmission power for each panel.

2. The terminal according to claim 1, wherein

the receiving section receives a configuration related to maximum output power per serving cell and per carrier, and

the control section determines, based on the configuration related to the maximum output power, maximum output power per panel.

3. The terminal according to claim 1, wherein
the control section determines maximum output power for each panel by using a requirement defined based on a peak effective isotropic radiated power (EIRP) measurement value per terminal and a total radiated power measurement value per terminal.

4. The terminal according to claim 1, wherein
the control section determines maximum output power for each panel by using a requirement defined based on a peak effective isotropic radiated power (EIRP) measurement value per panel and a total radiated power measurement value per panel.

5. A radio communication method for a terminal, the radio communication method comprising:

receiving, when uplink (UL) simultaneous transmission from multiple panels is supported, a configuration related to transmission power per panel; and
controlling, based on the configuration, UL transmission power for each panel.

6. A base station comprising:

a transmitting section that, when uplink (UL) simultaneous transmission from multiple panels is supported, transmits a configuration related to transmission power per panel; and
a control section that controls reception of a UL signal using UL transmission power of a terminal, the UL transmission power being controlled for each panel, based on the configuration.

FIG. 1A

UE
PANEL #1

PUSCH

1 TRP

PANEL #2

FIG. 1B

UE
PANEL #1

PUSCH

1 TRP

PUSCH#1

PUSCH#2

PANEL #2

FIG. 1C

UE
PANEL #1

PUSCH

2 TRP

PUSCH#1

PUSCH#2

PANEL #2

ideal
backhaul

FIG. 2A

FIG. 2B

PUCCH RESOURCE #1

PANEL/BEAM #1

TRP#1

PANEL/BEAM #2

PUCCH RESOURCE #2

TRP#2

PUCCH RESOURCE

PANEL/BEAM #1

TRP#1

PANEL/BEAM #2

TRP#2

EP 4 507 399 A1

FIG. 3A

UE

PANEL #1

PUSCH

$P_{PUSCH,b,f,c,\ p=1}\ (i,j,q_d,l)$

PANEL #2

$P_{PUSCH,b,f,c,\ p=2}\ (i,j,q_d,l)$

FIG. 3B

UE

PANEL #1

PUCCH

$P_{PUCCH,b,f,c,\ p=1}\ (i,q_u,q_d,l)$

PANEL #2

$P_{PUCCH,b,f,c,\ p=2}\ (i,q_u,q_d,l)$

FIG. 3C

UE

PANEL #1

SRS

$P_{SRS,b,f,c,\ p=1}\ (i,q_s,l)$

PANEL #2

$P_{SRS,b,f,c,\ p=2}\ (i,q_s,l)$

| UE Power class | UE type |
|---|---|
| 1 | Fixed wireless access (FWA) UE |
| 2 | Vehicular UE |
| 3 | Handheld UE |
| 4 | High power non-handheld UE |

FIG. 4

| P | R | PH (Type 1, PCell) |
|---|---|---|
| MPE or R | | $P_{CMAXpanel,f,c,p}$ |

FIG. 5

FIG. 6A

FIG. 6B

FIG. 7

FIG. 8

EP 4 507 399 A1

FIG. 9

BASE STATION 10, USER TERMINAL 20

1001 PROCESSOR

1007

1004 COMMUNICATION APPARATUS

1002 MEMORY

1005 INPUT APPARATUS

1003 STORAGE

1006 OUTPUT APPARATUS

FIG. 10

FIG. 11

## INTERNATIONAL SEARCH REPORT

International application No.

**PCT/JP2022/017367**

### A. CLASSIFICATION OF SUBJECT MATTER

*H04W 52/34*(2009.01)i; *H04W 16/28*(2009.01)i
FI:     H04W52/34; H04W16/28 130

According to International Patent Classification (IPC) or to both national classification and IPC

### B. FIELDS SEARCHED

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | ZTE. Initial views on Rel-18 MIMO evolution [online]. 3GPP TSG RAN WG1 #108-e R1-2201192. 14 February 2022 section 2.7 | 1, 2, 5, 6 |
| Y | | 3, 4 |
| Y | 3rd Generation Partnership Project;. Technical Specification Group Radio Access Network; NR; User Equipment (UE) radio transmission and reception; Part 2: Range 2 Standalone (Release 17). 3GPP TS 38.101-2 V17.5.0 (March 2022). 01 April 2022, pp. 56-63, 77-83 sections 6.2.1, 6.2D.1 | 3, 4 |

☐ Further documents are listed in the continuation of Box C.          ☐ See patent family annex.

| | |
|---|---|
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **25 October 2022** | **08 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010